# EUROPÄISCHE PATENTSCHRIFT

(11) **EP 0 478 766 B1**
(45) Veröffentlichungstag und Bekanntmachung des Hinweises auf die Patenterteilung: **07.09.1994**
(21) Anmeldenummer: 91908876.5
(22) Anmeldetag: 19.04.1991
(51) Int. Cl.: F16K 41/10, F16K 31/52

(54) **ANTRIEB FÜR DIE SCHALTSPINDEL EINER ABSPERR- ODER UMLENKARMATUR**
DRIVE FOR THE OPERATING SPINDLE OF A STOP OR DIVERSION FITTING
ENTRAINEMENT DE LA PERCHE D'ACTIONNEMENT D'UN RACCORD D'OBTURATION OU DE DEVIATION

(30) Priorität: 19.04.1990 DE 4012425
(43) Veröffentlichungstag der Anmeldung: 08.04.1992
(73) Patentinhaber: SCHUTH, HORST, D-51503 Rösrath (DE)
(72) Erfinder: SCHUTH, HORST, D-51503 Rösrath (DE)
(74) Vertreter: Freischem, Werner, Dipl.-Ing.
(86) Internationale Anmeldenummer: EP9100754
(87) Internationale Veröffentlichungsnummer: WO9116563

(56) Entgegenhaltungen:
- DE-A- 1 927 524
- DE-A- 2 426 748
- DE-A- 3 404 219
- US-A- 3 452 961

## Beschreibung

Die Erfindung bezieht sich auf einen Antrieb für das Schaltorgan einer Absperr- oder Umlenkarmatur, mit einem Schaltgehäuse, das mit einem Durchlaß für einen Schalthebel versehen ist, der mittels eines den Schalthebel teilweise umgebenden Faltenbalges abgedichtet ist, dessen eines Ende an einem Teller oder Ringbund des Schalthebels und dessen anderes Ende am Durchlaß des Schaltgehäuses dicht befestigt ist.

Bei Absperr- und Umlenkarmaturen von Rohrleitungen, wie Kugelhähne, Ventile, Klappen oder dergleichen, die toxische, krebserzeugende oder radioaktive Flüssigkeiten, Dämpfe oder Gase führen, besteht die Forderung, daß das Schaltorgan der Absperr- und Umlenkarmatur hermetisch abgedichtet ist.

Aus der deutschen Offenlegungsschrift DE-A-3 404 219 sind Ventile bekannt, die ein verschiebbar geführtes Ventilverschlußstück aufweisen, das durch abgedichtete Antriebe der oben genannten Art antreibbar ist. Hierzu ist des Ventilverschlußstück gelenkig mit einem Hebel verbunden, der durch die Gehäusewand der Armatur geführt ist und mit einem Stellkolben eines auf das Gehäuse aufgesetzten Stellzylinders verbunden ist. Diese Antriebe eignen sich jedoch nicht zur Betätigung von Armaturen mit einem drehbaren, über eine Schaltspindel betätigbaren Schaltorgan, da der Drehpunkt des Hebels am Durchlaß des Gehäuses und nicht an der Verbindungsstelle mit dem Schaltorgan angeordnet ist.

Aus der US-A-2 607 233, US-A-3 051 008, US-A-3 811 651, FR-A-1 213 055, FR 1 408 365 und EP-A-0 089 757 sind Absperr- oder Umlenkarmaturen bekannt, deren Schaltspindel nach dem Prinzip eines taumelnden Faltenbalges abgedichtet ist. Der Faltenbalg ist über einen abgebogenen Teil der Schaltspindel gestülpt, an einem Ende geschlossen und mit dem anderen, offenen Ende dicht mit dem Gehäuse der Absperr- oder Umlenkarmatur verbunden, insbesondere angeschweißt. Diese Antriebe haben den Nachteil, daß sie schwergängig sind und sehr große Reibungskräfte auftreten und daß der Faltenbalg auf Torsion beansprucht wird, wodurch seine Lebensdauer verkürzt wird.

Der Erfindung liegt die Aufgabe zugrunde, einen Antrieb für Absperr- oder Umlenkarmaturen mit drehbarem Schaltorgan zu schaffen, bei dem die Nachteile der bekannten hermetisch abgedichteten Antriebe vermieden sind und bei dem der abdichtende Faltenbalg eine größere Lebensdauer hat und seine Beanspruchung den Erfordernissen genau und mit geringem Aufwand angepaßt werden kann.

Diese Aufgabe wird erfindungsgemäß durch die Merkmale des Patentanspruches 1 gelöst.

Der Antrieb nach der Erfindung hat den Vorteil, daß der Faltenbalg nur in einer Ebene, nämlich der Schwenkebene des Schalthebels, belastet wird und nicht auf Torsion beansprucht wird. Durch entsprechende Wahl des Übersetzungsverhältnisses können die für einen Schaltvorgang erforderlichen Kräfte sowie die maximale Auslenkung des Faltenbalges den Erfordernissen angepaßt werden. Ist der Abstand der Schwenkachse von der Spindelachse größer als der Kurbelradius der Schaltspindel, dann ist der Schwenkwinkel des Schalthebels von einer Schaltstellung in die andere kleiner als 45°. Dieser Schwenkwinkel kann auf 30 oder 22,5 reduziert werden, wenn der Abstand der Schwenkachse von der Schaltspindelachse auf die doppelte oder dreifache Größe des Kurbelradius der Schaltspindel vergrößert wird.

Der Schalthebel kann als Handhebel ausgebildet sein oder aber mit der Kolbenstange eines pneumatischen oder hydraulischen Stellantriebes in Wirkverbindung stehen. Der Stellantrieb kann unmittelbar an das Schaltgehäuse angeflanscht sein, derart, daß die dadurch bewirkte zusätzliche Abdichtung als Sicherheitsdichtung wirkt. Der außerhalb des Faltenbalges befindliche Raum um den Schalthebel, der durch das angeschraubte Gehäuse des Stellantriebes abgedichtet ist, kann durch einen Signalgeber überwacht werden, der bei Undichtigkeit des Faltenbalges durch den dann erfolgenden Druckanstieg ein optisches oder auch akustisches Signal gibt.

Weitere Merkmale der Erfindung sind aus den Patentansprüchen 2 bis 12 ersichtlich.

In der folgenden Beschreibung werden zwei Ausführungsbeispiele des erfindungsgemäßen Antriebs für die Schaltspindel einer Absperr- oder Umlenkarmatur näher erläutert. Die Zeichnungen zeigen in
- Fig. 1: eine Schnittansicht des Antriebs nach der Erfindung bei einem Schnitt entlang der Achse der Schaltspindel bzw. nach der Schnittlinie I-I in Fig. 2,
- Fig. 2: eine Ansicht nach der Schnittlinie II-II in Fig. 1,
- Fig. 3: eine Schnittansicht einer zweiten Ausführungsform der Erfindung bei einem Schnitt entlang der Achse der Schaltspindel bzw. nach der Schnittlinie III-III in Fig. 4,
- Fig. 4: eine Ansicht nach der Schnittlinie IV-IV in Fig. 3.

An einer Absperr- oder Umlenkarmatur, insbesondere an einem Kugelhahn ist ein Schaltgehäuse 1 angeflanscht, in dem eine Schaltspindel 2 gelagert ist, die mit Hilfe eines Schalthebels 4 um 90° verschwenkt werden kann. Die Übersetzung des Schalthebels 4 ist so ausgebildet, daß bei einer Drehbewegung der Schaltspindel 2 der Faltenbalg 3 eine geringere angulare Bewegung ausführen muß als der Schaltwinkel der Schaltspindel 2 beträgt. Der Schalthebel 4 ist um etwa 30 um eine Schwenkachse 5 schwenkbar am Schaltgehäuse 1 gelagert und greift mit einem mit einem Langloch 19 versehenen Ende an einen Kurbelzapfen 6 der Schaltspindel 2 an. Bei einer Schwenkbewegung des Schalthebels 4 um die Schwenkachse 5 vollführt der Kurbelzapfen 6 der Schaltspindel 2 und damit auch das Absperrorgan der Armatur eine Schwenkbewegung von 90° um die Achse der Schaltspindel 2. Das andere Ende des Schalthebels 4 kann - wie Fig. 4 zeigt - als Handhebel 30 ausgebildet sein oder aber von der Kolbenstange 8 eines Kolbenantriebes 31 in die beiden Schaltstellungen gebracht werden. Innerhalb eines Zwischengehäuses 7, welches dichtschließend am Schaltgehäuse 1 befestigt ist, ist das äußere Ende des Schalthebels 4 mit einer Kolbenstange 8 beweglich verbunden, die von in Zylindern 10 geführten Kolben 15,16 linear in eine der beiden Schaltstellungen bewegt werden kann. Das äußere Ende des Schalthebels 4 ist gabelförmig ausgebildet,und die Gabelschenkel greifen in Ausnehmungen 21 der Kolbenstange 8 ein.

Der Durchlaß 24 des Schalthebels 4 ist mittels eines Faltenbalges 3 gegen das Zwischengehäuse 7 hermetisch abgedichtet. Der vorzugsweise aus Metall, insbesondere nichtrostendem Stahl, bestehende Faltenbalg 3 ist mit einem Ende an einem Teller 22 des beweglichen Schalthebels 4 angeschweißt und mit dem anderen Ende an einer feststehenden Ringscheibe 23, die dicht mit der Wandung des Schaltgehäuses 1 verbunden ist.

Die Kolbenstange 8 ist über Dichtungsringe 9 zum Zylinder 10 hin abgedichtet, wobei zwischen zwei oder mehr Dichtungsringen eine Bohrung 11 zur Atmosphäre führt, damit das Steuermedium des Zylinders 10 nicht in die innere Kammer des Zwischengehäuses 7 gelangen kann, sowie auch ein bei einem Defekt des Faltenbalges 3 anstehender Druck, herrührend aus der zu betätigenden Armatur, nicht in den Zylinder 10 gelangen kann. Diese Dichtungsringe 9 dienen auch als Sicherheitsstopfbuchse. Ein im Zwischengehäuse 7 nach innen bis zum Anschlag ragender Anzeigestift 12 wird nach außen gedrückt, falls ein Defekt des Faltenbalges 3 eingetreten ist und somit ein Überdruck im Zwischengehäuse 7 entstanden ist. Die Kolben 15,16 werden hydraulisch oder pneumatisch von einem Druckmittel beaufschlagt, das durch die Bohrung 13 in einen Zylinder 10 eintritt und über die Bohrung 14 in der Kolbenstange 8 in den anderen Zylinder 10 gelangt und beide,über die Kolbenstange 8 starr verbundenen Kolben 15,16 in eine Endstellung drückt. Eingebaute Druckfedern 17 bewirken die Rückstellung der Kolben 15,16 in die andere Endstellung.

Der Schwenkbolzen 5 ist beidseitig in feststehenden Wänden 27,28 gelagert, die vom Schaltgehäuse 1 aus in den Faltenbalg 3 hineinragen. Damit der Schalthebel 4 und die Bolzen 5 und 6 montiert werden können, ist der Schalthebel 4 aus zwei ineinandersteckbaren Teilen 4 und 4' zusammengesetzt.

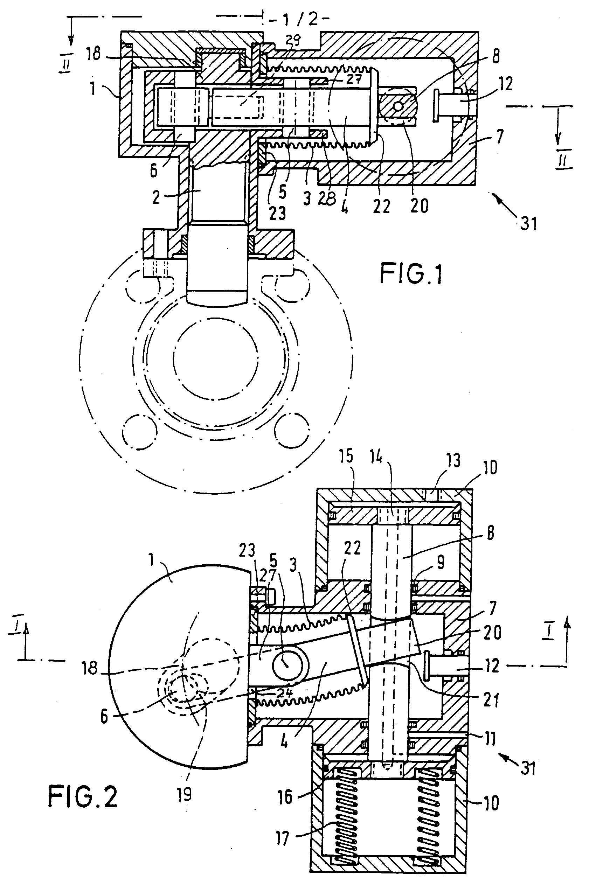

Bei der Ausführungsform gemäß den Fig. 1 und 2 ist der Faltenbalg 3 in einem am Schaltgehäuse 1 angeflanschten Zwischengehäuse 7 angeordnet. Der gegebenenfalls erhöhte Atmosphärendruck drückt gegen die Außenwand des hermetisch dichtenden Faltenbalges 3.

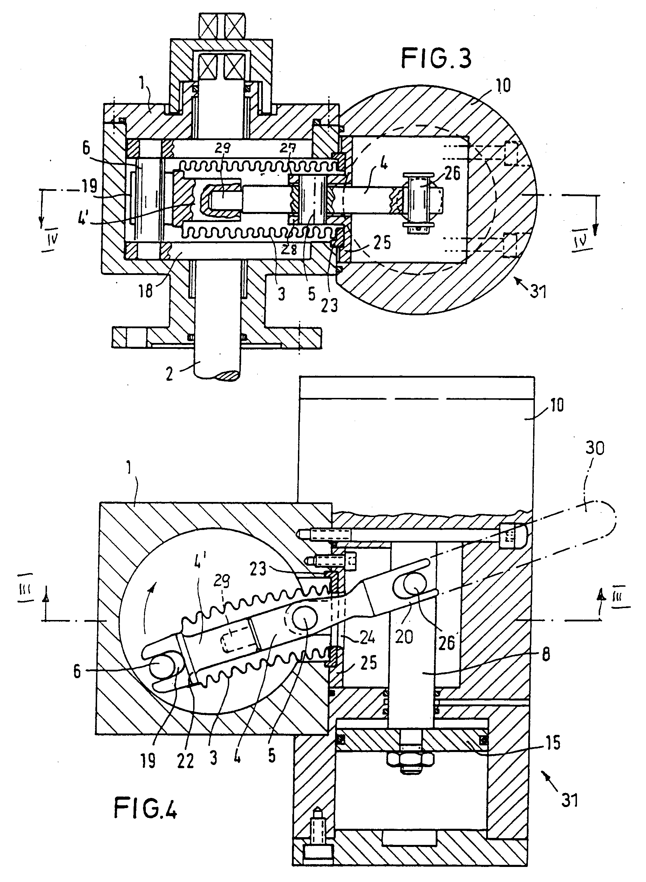

Bei der Ausführungsform gemäß den Fig. 3 und 4 ist der Faltenbalg 3 im Schaltgehäuse 1 angeordnet. Der gegebenenfalls erhöhte Druck in der Armatur drückt gegen die Außenwand des Faltenbalges 3. Diese Anordnung ist vorzuziehen, wenn mit hohen Drücken in der Absperr- oder Umlenkarmatur zu rechnen ist. Bei sehr hohen Drücken hätte die Ausführungsform nach den Fig. 1 und 2 den Nachteil, daß der Druck im Inneren des Faltenbalges 3 diesen zu strecken versucht, wodurch ein Verstellen des Schalthebels 4 und damit auch der Schaltspindel 2 bewirkt würde.

Bei der Ausführungsform nach Fig. 3 und 4 sind gleichwirkende Teile mit den gleichen Bezugszeichen versehen wie bei der Ausführungsform nach Fig. 1 und 2.

Damit der Durchlaß 24 auch in Schwenkrichtung des Schalthebels 4 klein gehalten werden kann, ist es zweckmäßig, die Schwenkachse 5 möglichst in Nähe des Durchlasses 24 zu legen. In diesem Fall kann auch der Durchmesser des Faltenbalges 3 klein sein. Der Abstand der Schwenkachse 5 von der Achse der Schaltspindel 2 ist etwas größer als der Kurbelradius der Schaltspindel 2. Das bedeutet, daß zur Bewirkung einer 90°-Drehung der Schaltspindel 2 eine Schwenkbewegung des Schalthebels 4 von weniger 45 erforderlich ist. Ist der Abstand der Schwenkachse 5 von der Achse der Schaltspindel 2 doppelt so groß wie der Kurbelradius, dann genügt eine 30°-Schwenkbewegung des Schalthebels 4 um die Schaltspindel 2 um 90° zu drehen.

Ist der Abstand der Schwenkachse 5 von der Achse der Schaltspindel 2 dreimal so groß wie der Kurbelradius, dann ist für eine 90°-Schaltbewegung der Schaltspindel 2 eine Schwenkbewegung des Schalthebels 4 um 22,5 erforderlich. Je kleiner die zum Schalten erforderliche Schwenkbewegung des Schalthebels 4 ist, umso größer ist die Lebensdauer bzw. die maximal zulässige Schalthäufigkeit des Faltenbalges 3. Der Schwenkwinkel kann reduziert und die Montierbarkeit verbessert werden, wenn in Fig. 4 die Schwenkachse 5 in die Ebene des Durchlasses 24 oder nach außen, außerhalb des Faltenbalges 3, verlegt würde.

Zum leichten Anschweißen des aus Edelstahl bestehenden Faltenbalges 3 an den Ringbund 22' und die Ringscheibe 23 können nicht dargestellte, in die Endringe des Faltenbalges 3 mit geringem Spiel einschiebbare Ringkragen vorgesehen sein, die mit den Endringen dicht verschweißt werden. Ein derartiger Ringkragen kann auch unmittelbar am Deckel 25 des Schaltgehäuses 1 vorgesehen sein. Weil der Schalthebel 4 geteilt ist, ist es bei aggressiven Stoffen nur erforderlich, daß der kurbelseitige Teil 4' des Schalthebels 4 aus nichtrostendem Stahl besteht.

## Patentansprüche

1. Antrieb für das Schaltorgan einer Absperr- oder Umlenkarmatur, mit einem Schaltgehäuse (1), das mit einem Durchlaß (24) für einen Schalthebel (4,4′) versehen ist, der mittels eines den Schalthebel (4,4′) teilweise umgebenden Faltenbalges (3) abgedichtet ist, dessen eines Ende an einem Teller (22) oder Ringbund (22′) des Schalthebels (4,4′) und dessen anderes Ende am Durchlaß (24) des Schaltgehäuses (1) dicht befestigt ist, gekennzeichnet durch die folgenden Merkmale:
a) das Schaltorgan ist eine um ihre Achse drehbare Schaltspindel (2), die einen Kurbelzapfen (6) aufweist, der im Abstand von der Achse der Schaltspindel (2) parallel zu dieser angeordnet ist und innerhalb des Schaltgehäuses (1) in seine Schaltstellungen schwenkbar ist,
b) der Schalthebel (4,4′) ist am Schaltgehäuse (1) um eine parallel zur Schaltspindel (2) verlaufende Schwenkachse (5) gelagert, dessen innerhalb des Schaltgehäuses (1) befindliches Ende am Kurbelzapfen (6) angreift und dessen außerhalb des Schaltgehäuses (1) befindliche Ende antreibbar ist,
c) die Schaltstellungen des Kurbelzapfens (6) sind symmetrisch zu der durch die Achse der Schaltspindel (2) und die Schwenkachse (5) verlaufenden Ebene angeordnet und der Abstand der Schwenkachse (5) von der Achse der Schaltspindel (2) ist größer als der Abstand der Achse des Kurbelzapfens (6) von der Achse der Schaltspindel (2).

2. Antrieb nach Anspruch 1, dadurch gekennzeichnet, daß der Abstand der Schwenkachse (5) von der Achse der Schaltspindel (2) mindestens doppelt so groß ist wie der Abstand des Kurbelzapfens (6) von der Achse der Schaltspindel (2).

3. Antrieb nach Anspruch 1 oder 2, dadurch gekennzeichnet, daß der Faltenbalg (3) aus Metall besteht und seine Enden am Teller (22) oder Ringbund (22′) des Schalthebels (4,4′) und am Durchlaß (24) des Schaltgehäuses (1) angeschweißt oder angelötet sind.

4. Antrieb nach Anspruch 3, dadurch gekennzeichnet, daß die innerhalb des Schaltgehäuses (1) befindlichen Metallteile und der Faltenbalg (3) aus nichtrostendem Stahl bestehen.

5. Antrieb nach einem der Ansprüche 1 bis 4, dadurch gekennzeichnet, daß der Faltenbalg (3) außerhalb des Schaltgehäuses (1) angeordnet ist und mit einem Ende mit einem am antriebsseitigen Teil des Schalthebels (4) befestigten Teller (22) dicht verbunden ist.

6. Antrieb nach einem der Ansprüche 1 bis 4, dadurch gekennzeichnet, daß der Faltenbalg (3) innerhalb des Schaltgehäuses (1) angeordnet ist und mit einem Ende mit einem in Nähe des Kurbelzapfens (6) befindlichen Ringbund (22′) des Schalthebels (4,4′) dicht verbunden ist.

7. Antrieb nach Anspruch 5 oder 6, dadurch gekennzeichnet, daß die den Schwenkbolzen (5) haltenden und am Schaltgehäuse (1) befestigten Wände (27,28) in den Faltenbalg (3) hineinragen.

8. Antrieb nach Anspruch 7, dadurch gekennzeichnet, daß der Schalthebel (4) zwischen der Schwenkachse (5) und dem am Kurbelzapfen (6) angreifenden Teil (4′) geteilt ist und die beiden Teile (4,4′) insbesondere über einen Steckbolzen (29) biegesteif miteinander verbunden sind.

9. Antrieb nach einem der Ansprüche 1 bis 8, dadurch gekennzeichnet, daß der Schalthebel (4) als Handhebel (30) ausgebildet ist.

10. Antrieb nach einem der Ansprüche 1 bis 8, dadurch gekennzeichnet, daß am Schaltgehäuse (1) ein pneumatischer oder hydraulischer Kolbenantrieb (31) angebracht ist, der den Schalthebel (4) in seine Schaltstellungen bewegt.

11. Antrieb nach Anspruch 10, dadurch gekennzeichnet, daß der Kolbenantrieb (31) zwei in Zylinder (10) geführte und über eine Kolbenstange (8) starr miteinander verbundene Kolben (14,15) aufweist und der Schalthebel (4) mit dieser Kolbenstange (8) in Wirkverbindung steht.

12. Antrieb nach Anspruch 10 oder 11, dadurch gekennzeichnet, daß der Raum außerhalb der durch den Faltenbalg (3) bewirkten hermetischen Abdichtung durch den angeschraubten Kolbenantrieb (31) abgedichtet ist und in der Wandung dieses Raumes ein Anzeigestift (12) angebracht ist, der bei erhöhtem Druck in diesem Raum eine Undichtigkeit des Faltenbalges (3) anzeigt.

## Claims

1. A drive for the switching member of a shut-off or diversion fitting, comprising a switching housing (1) provided with a passage (24) for a switching lever (4, 4′) which is sealed off by means of a bellows (3) which partially surrounds the switching lever (4, 4′) and of which one end is sealingly fixed to a plate (22) or collar (22′) of the switching lever (4, 4′) and the other end is sealingly fixed to the passage (24) of the switching housing (1), characterised by the following features:
a) the switching member is a switching spindle (2) which is rotatable about its axis and which has a crank pin (6) which is arranged at a spacing from the axis of the switching spindle (2) parallel thereto and is pivotable into its switching positions within the switching housing (1),
b) the switching lever (4, 4′) is mounted on the switching housing (1) about a pivot axis (5) extending parallel to the switching spindle (2), the end of the switching lever which is disposed within the switching housing (1) engaging the crank pin (6) and the end thereof which is disposed outside the switching housing (1) being drivable, and
c) the switching positions of the crank pin (6) are arranged symmetrically relative to the plane passing through the axis of the switching spindle (2) and the pivot axis (5) and the spacing of the pivot axis (5) from the axis of the switching spindle (2) is greater than the spacing of the axis of the crank pin (6) from the axis of the switching spindle (2).

2. A drive according to claim 1 characterised in that the spacing of the pivot axis (5) from the axis of the switching spindle (2) is at least twice as great as the spacing of the crank pin (6) from the axis of the switching spindle (2).

3. A drive according to claim 1 or claim 2 characterised in that the bellows (3) comprises metal and its ends are welded or soldered to the plate (22) or collar (22′) of the switching lever (4, 4′) and to the passage (24) of the switching housing (1).

4. A drive according to claim 3 characterised in that the bellows (3) and the metal parts disposed within the switching housing (1) comprise stainless steel.

5. A drive according to one of claims 1 to 4 characterised in that the bellows (3) is arranged outside the switching housing (1) and is sealingly connected by one end to a plate (22) fixed to the part of the switching lever (4), which is at the drive side.

6. A drive according to one of claims 1 to 4 characterised in that the bellows (3) is arranged within the switching housing (1) and is sealingly connected by one end to a collar (22′) of the switching lever (4, 4′), which collar is in the vicinity of the crank pin (6).

7. A drive according to claim 5 or claim 6 characterised in that the walls (27, 28) which hold the pivot pin (5) and which are fixed to the switching housing (1) project into the bellows (3).

8. A drive according to claim 7 characterised in that the switching lever (4) is divided between the pivot axis (5) and the part (4′) which engages the crank pin (6) and the two parts (4, 4′) are connected together in such a way as to be resistant to bending, in particular by way of a fitting pin (29).

9. A drive according to one of claims 1 to 8 characterised in that the switching lever (4) is in the form of a hand lever (30).

10. A drive according to one of claims 1 to 8 characterised in that disposed on the switching housing (1) is a pneumatic or hydraulic piston drive (31) which moves the switching lever (4) into its switching positions.

11. A drive according to claim 10 characterised in that the piston drive (31) has two pistons (14, 15) which are guided in the cylinder (10) and which are rigidly connected together by way of a piston rod (8) and the switching lever (4) is operatively connected to said piston rod (8).

12. A drive according to claim 10 or claim 11 characterised in that the space outside the hermetic sealing arrangement provided by the bellows (3) is sealed off by the piston drive (31) which is screwed in position and mounted in the wall of said space is an indicator pin (12) which indicates a leak in the bellows (3) when there is an increased pressure in said space.

## Revendications

1. Entraînement de l'organe d'actionnement d'un raccord d'obturation ou de déviation, comportant un boîtier d'actionnement (1) présentant un passage (24) pour un levier d'actionnement (4, 4′) étanché au moyen d'un soufflet (3) entourant partiellement le levier d'actionnement (4, 4′), et dont l'une des extrémités est fixée de manière étanche à un disque (22) ou une collerette annulaire (22′) du levier d'actionnement (4, 4′) tandis que l'autre extrémité est fixée de manière étanche au niveau du passage (24) du boîtier d'actionnement (1), caractérisé en ce que :
a) l'organe d'actionnement est une perche d'actionnement (2) mobile autour de son axe, qui présente un tourillon de manivelle (6) agencé à distance de l'axe de la perche d'actionnement (2), parallèlement à ce dernier, et qui peut pivoter dans ses positions d'actionnement à l'intérieur du boîtier d'actionnement (1),
b) le levier d'actionnement (4, 4′) est monté dans le boîtier d'actionnement (1) sur un axe de pivotement (5) parallèle à la perche d'actionnement (2), et son extrémité située à l'intérieur du boîtier d'actionnement (1) agit sur le tourillon de manivelle (6) tandis que son extrémité située à l'extérieur du boîtier d'actionnement (1) est susceptible d'être entraînée,
c) les positions d'actionnement du tourillon de manivelle (6) sont symétriques par rapport au plan passant par l'axe de la perche d'actionnement (2) et l'axe de pivotement (5), et la distance entre l'axe de pivotement (5) et l'axe de la perche d'actionnement (2) est supérieure à la distance entre l'axe du tourillon de manivelle (6) et l'axe de la perche d'actionnement (2).

2. Entraînement selon la revendication 1, caractérisé en ce que la distance entre l'axe de pivotement (5) et l'axe de la perche d'actionnement (2) est au moins deux fois supérieure à la distance entre le tourillon de manivelle (6) et l'axe de la perche d'actionnement (2).

3. Entraînement selon la revendication 1 ou 2, caractérisé en ce que le soufflet (3) est en métal et en ce que ses extrémités sont respectivement soudées ou brasées sur un disque (22) ou une collerette annulaire (22′) du levier d'actionnement (4, 4′) et sur le passage (24) ménagé dans le boîtier d'actionnement (1).

4. Entraînement selon la revendication 3, caractérisé en ce que les pièces métalliques situées à l'intérieur du boîtier d'actionnement (1) et le soufflet (3) sont réalisés en acier inoxydable.

5. Entraînement selon l'une des revendications 1 à 4, caractérisé en ce que le soufflet (3) est agencé à l'extérieur du boîtier d'actionnement (1) et en ce que l'une de ses extrémités est reliée de manière étanche à un disque (22) fixé sur une partie du levier d'actionnement (4), côté entraînement.

6. Entraînement selon l'une des revendications 1 à 4, caractérisé en ce que le soufflet (3) est agencé à l'intérieur du boîtier d'actionnement (1) et en ce que l'une de ses extrémités est reliée de manière étanche à une collerette annulaire (22′) du levier d'actionnement (4, 4′), située à proximité du tourillon de manivelle (6).

7. Entraînement selon la revendication 5 ou 6, caractérisé en ce que les parois (27, 28) supportant l'axe de pivotement (5) et fixées au boîtier d'actionnement (1) dépassent à l'intérieur du soufflet (3).

8. Entraînement selon la revendication 7, caractérisé en ce que le levier d'actionnement (4) est divisé, entre l'axe de pivotement (5) et la partie (4′) agissant sur le tourillon de manivelle (6), et en ce que les deux parties (4, 4′) sont reliées de manière rigide en particulier au moyen d'un axe débrochable (29).

9. Entraînement selon l'une des revendications 1 à 8, caractérisé en ce que le levier d'actionnement (4) se présente sous la forme d'un levier à main (30).

10. Entraînement selon l'une des revendications 1 à 8, caractérisé en ce que sur le boîtier d'actionnement (1) est prévu un entraînement pneumatique ou hydraulique par piston (31), qui déplace le levier d'actionnement (4) dans ses positions d'actionnement.

11. Entraînement selon la revendication 10, caractérisé en ce que l'entraînement par piston (31) comporte deux pistons (14, 15) guidés dans le cylindre (10) et reliés l'un à l'autre de manière rigide par une tige de piston (8) et en ce que le levier d'actionnement (4) est en liaison active avec cette tige de piston (8).

12. Entraînement selon la revendication 10 ou 11, caractérisé en ce que l'espace situé à l'extérieur du volume étanché hermétiquement par le soufflet (3) est étanché par l'entraînement par piston (31) rapporté par vissage et en ce que dans la paroi limitant cet espace est agencée une goupille de signalisation (12), qui signale un défaut d'étanchéité du soufflet (3) en cas de surpression dans cet espace.
